Europäisches Patentamt

European Patent Office

Office européen des brevets

(11) Veröffentlichungsnummer: **0 198 995**
A2

# EUROPÄISCHE PATENTANMELDUNG

(21) Anmeldenummer: **86100477.8**

(22) Anmeldetag: **16.01.86**

(51) Int. Cl.⁴: **G 01 N 21/37**

(30) Priorität: 26.04.85 DE 3515128

(43) Veröffentlichungstag der Anmeldung:
29.10.86 Patentblatt 86/44

(84) Benannte Vertragsstaaten:
DE FR GB IT NL

(71) Anmelder: **Hartmann & Braun Aktiengesellschaft**
**Gräfstrasse 97**
**D-6000 Frankfurt am Main 90(DE)**

(72) Erfinder: **Fabinski, Walter**
**An der Landwehr 70**
**D-6239 Kriftel(DE)**

(54) Infrarot-Gasanalysator.

(57) Bei einem Infrarot-Gasanalysator werden die zwei die Meßküvette und Vergleichsküvette verlassenden Strahlenbündel von zwei Empfängerkammern aufgenommen, zwischen denen als Indikator für die Differenz der Drücke in beiden Empfängerkammern eine piezoelektrisch wirkende Folie aus Polyvinylidenfluorid angeordnet ist, die so gespannt ist, daß sie die Druckschwankungen voll aufnimmt.

EP 0 198 995 A2

"Infrarot-Gasanalysator"

Bei dem Infrarot-Gasanalysator dient die spezifische Strahlungsabsorption mehratomiger nichtelementarer Gase im infraroten
Spektralbereich als Meßeffekt. Die Absorption wird in einer
Wechselschicht-Fotometeranordnung mit zwei parallelen Strahlengängen und einem selektiv wirkenden gasgefüllten Strahlungsempfänger gemessen.

Das Meßgas wird durch die im Meßstrahlengang liegende Analysenkammer geleitet. In der Vergleichskammer im zweiten Strahlengang befindet sich ein Gas, das keine infrarote Strahlen
absorbiert.

Abhängig von der Konzentration der Meßkomponente in der Analysenkammer gegenüber dem konstanten Wert in der Vergleichskammer stellt sich nun eine Differenz der Strahlung am Ausgang der Kammern ein.

Diese Strahlungsdifferenz bewirkt eine unterschiedliche
Erwärmung bzw. unterschiedliche Drücke in den beiden zugeordneten Empfängerkammern. Diese Druckdifferenz wird von

0198995

einem Membrankondensator erfaßt und in ein elektrisches
Signal umgewandelt.

Solche Infrarot-Gasanalysatoren sind z. B. in dem Listenblatt
20-1.12 der Anmelderin vom Mai 1983 Seite 1 beschrieben.

Die Erfindung bezieht sich auf einen derartigen mit Meß-
und Vergleichskammer ausgerüsteten Infrarot-Gasanalysator
und besteht darin, daß zur Umwandlung der Druckdifferenz
zwischen den Empfängerkammern in ein elektrisches Signal
zwischen den Empfängerkammern eine piezoelektrisch wirkende
Folie aus Polyvinylidenfluorid vorgesehen ist, die so gespannt ist, daß sie die Druckschwankungen voll aufnimmt.

Ein Ausführungsbeispiel gemäß der Erfindung wird anhand der
Zeichnung näher erläutert.

Eine Strahlenleitvorrichtung 1 wandelt die Infrarotstrahlen
einer Lichtquelle 2 in zwei parallele Strahlenbündel 3 und 4
um. Das Lichtstrahlenbündel 3 tritt durch das Fenster 5 aus
der Leitvorrichtung 1 in die Meßküvette 8, die von dem die
Meßkomponente enthaltenden Gas durchströmt wird. Die die Meßküvette verlassenden Infrarotstrahlen werden von der Empfängerkammer 10 aufgenommen.

Das Strahlenbündel 4 verläßt die Leitvorrichtung 1 durch das
Fenster 6 und durchläuft die Vergleichsküvette 9, in der sich
ein Infrarotstrahlen nicht absorbierendes Gas, z. B. Stickstoff, befindet. Die Infrarotstrahlen, die die Vergleichsküvette durchlaufen, werden von der Empfängerkammer 12 aufgenommen.

Vor den Küvetten 8 und 9 ist ein rotierendes Blendenrad 7
angeordnet, das die Strahlenbündel 3 und 4 abwechselnd unterbricht.

Die Empfängerkammern 10 und 12 arbeiten selektiv; sie enthalten das Gas, das zu analysieren ist bzw. ein Gas gleicher
Absorptionslinien.

Durch Absorption in der Empfängerkammer 10 entstehen Änderungen des Druckes, die sich der Höhe nach von den Druckänderungen in der Empfängerkammer 8, die von der Konzentration der Meßkomponente abhängig sind, unterscheiden. Zur Erfassung dieser Druckschwankungen ist zwischen den Empfängerkammern 8 und 10 eine Folie 11 aus Polyvinylidenfluorid angeordnet, die an den Klemmen 13 nach außen als Abbild dieser
Schwankungen ein elektrisches Signal abgibt. Die Folie 11 ist
in dem Gehäuse 14 untergebracht, das über die Rohrleitung 15
mit der Empfängerkammer 10 und über die Rohrleitung 16 mit
der Empfängerkammer 12 verbunden ist.

Die Folie 11 aus Polyvinylidenfluorid wirkt piezoelektrisch
und ist so gespannt, daß sie die Druckschwankungen zwischen
den Empfängerkammern 8 und 10 voll aufnimmt. Zum Ausgleich
des statischen Druckes kann in der Folie 11 ein Loch vorgegebener Größe vorgestanzt sein.

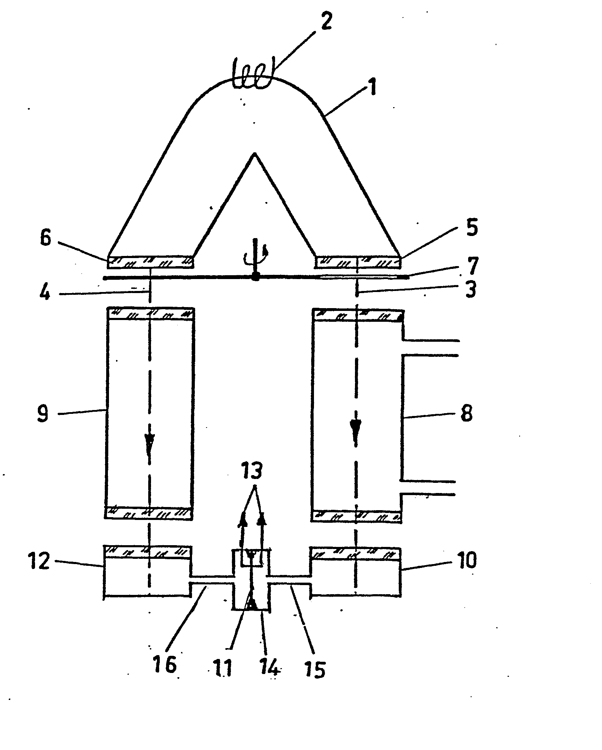

## Patentanspruch

Infrarot-Gasanalysator mit einer Meßküvette und einer Vergleichsküvette und zwei hinter der Meßküvette und der Vergleichsküvette angeordneten Empfängerkammern, in denen nach Maßgabe der Konzentration der Meßkomponente Druckdifferenzen entstehen, dadurch gekennzeichnet, daß zur Umwandlung der Druckdifferenz zwischen den Empfängerkammern (10 und 12) in elektrische Signale zwischen den Empfängerkammern (10 und 12) eine piezoelektrisch wirkende Folie (11) aus Polyvinylidenfluorid vorgesehen ist, die so gespannt ist, daß sie die Druckschwankungen voll aufnimmt.